# EUROPÄISCHE PATENTSCHRIFT

(11) **EP 1 998 071 B1**
(45) Veröffentlichungstag und Bekanntmachung des Hinweises auf die Patenterteilung: **03.04.2013**
(21) Anmeldenummer: 08154181.5
(22) Anmeldetag: 08.04.2008
(51) Int. Cl.: F16F 9/348, F16F 9/512

(54) **Dämpfventil für einen Schwingungsdämpfer**
Damping valve for a vibration damper
Soupape d'amortissement pour un amortisseur d'oscillations

(30) Priorität: 01.06.2007 DE 102007025677
(43) Veröffentlichungstag der Anmeldung: 03.12.2008
(73) Patentinhaber: ZF Friedrichshafen AG, 88038 Friedrichshafen (DE)
(72) Erfinder: Baalmann, Helmut, 97493 Bergrheinfeld (DE); Heyn, Steffen, 97464 Niederwerrn (DE); Thein, Thomas, 97526 Sennfeld (DE); Hegmann, Michael, 97453 Schonungen (DE)

(56) Entgegenhaltungen:
- EP-A1- 1 484 526
- DE-A1-102005 040 283
- DE-C- 946 758
- DE-C1- 10 041 199

## Beschreibung

Die Erfindung betrifft ein Dämpfventil für einen Schwingungsdämpfer gemäß dem Oberbegriff von Patentanspruch 1.

Aus der DE 10 2005 040 283 A1, Fig. 4, ist ein Dämpfventil für einen Schwingungsdämpfer bekannt, das zwischen zwei Stützfedern auf einer Kolbenstange eine Axialbewegung ausführen kann. Das Dämpfventil umfasst einen auf einer Führungshülse formschlüssig fixierten Dämpfventilkolben, der beidseitig mit mindestens einer Ventilscheibe bestückt ist, die von mindestens einem Federelement in Schließrichtung vorgespannt ist. Das Federelement stützt sich endseitig an einem Federteller ab, der einteilig mit der Führungshülse hergestellt ist.

Die Führungshülse ist in Längsrichtung zweiteilig ausgeführt und wird mittels einer Schnappverbindung geschlossen. Diese insgesamt sehr kompakte Bauform eines Dämpfventils erfüllt bei extrem hohen Belastungen nicht die geforderten Dauerlaufbedingungen. Des Weiteren führt die geteilte Führungshülse u. U. zu Leckströmen innerhalb des Dämpfventils, die den Einsatz von zusätzlichen Dichtmitteln erfordern. Damit ist jedoch ein erhöhter Bauraumbedarf verbunden.

Die Aufgabe der vorliegenden Erfindung besteht darin, ein Dämpfventil auf einer Führungshülse zuverlässig axial zu sichern und dabei Leckströme innerhalb des Dämpfventils zu vermeiden.

Erfindungsgemäß wird die Aufgabe dadurch gelöst, dass der Dämpfventilkörper und ein von der Führungshülse separat ausgeführter Federteller zwischen zwei axial beanstandeten Anschlägen der Führungshülse eine Verspannungskette bilden.

Der große Vorteil der Erfindung besteht darin, dass die innerhalb der Verspannungskette geschichteten Teile radial dicht sind und damit keine Leckströme zwischen den Bauteilen auftreten können. Bei der Montage werden die Bauteile des Dämpfventils auf die Führungshülse aufgefädelt und anschließend lässt sich die Führungshülse endseitig zu einem Anschlag radial aufweiten, so dass kein Axialspiel zwischen den Bauteilen vorliegt.

Um insgesamt sehr einfach herstellbare Teilegeometrien zu erreichen, ist vorgesehen, dass zwischen dem Federteller und dem Dämpfventilkörper eine Distanzhülse angeordnet ist. Über die Länge der Distanzhülse lässt sich die Vorspannung der mindestens einen Vorspannfeder für die Ventilscheibe bestimmen.

Man kann die Distanzhülse und der Federteller alternativ auch einteilig ausführen.

Um insgesamt die Teileanzahl innerhalb der Verspannungskette gering zu halten, weist die Distanzhülse eine Abhubbegrenzungsfläche für die mit dem Dämpfventilkörper zusammenwirkende Ventilscheibe auf.

Die Führungshülse wird beispielsweise als Drehteil hergestellt. Um einen möglichst geringen Zerspannungsaufwand betreiben zu müssen, erstreckt sich der Federteller radial über den Anschlag der Führungshülse und weist.

Der Federteller weist auf seiner dem Ventilkörper abgewandten Seite eine Abstützfläche für eine auf das Dämpfventil wirkende Stützfeder auf, die Abstützfläche mit einer Zentrierung für die Stützfeder aufgeführt ist. Auch diese Maßnahme dient der einfachen Herstellung der Führungshülse

In weiterer vorteilhafter Ausgestaltung ist die Abstützfläche in Richtung der Stützfeder bezogen auf den Anschlag der Führungshülse mit einem axialen Überstand ausgeführt. Damit wird sichergestellt, dass die Stützfeder an der Abstützfläche und nicht an dem Anschlag der Führungshülse zur Anlage kommt.

Die Kolbenstange unterteilt sich in mindestens zwei Funktionsbereiche. Dabei gleitet das Dämpfventil auf einem Kolbenstangentragabschnitt axial beweglich, der an einen Kolbenstangengleitabschnitt angeschweißt ist. Durch diese modulare Bauweise kann eine Standardbaueinheit mit verschiedenen Kolbenstangendurchmessern im Kolbenstangengleitabschnitt kombiniert werden.

Es besteht die Möglichkeit, dass sich die mindestens eine Stützfeder an einem radialen Absatz zwischen dem Kolbenstangentragabschnitt und dem Kolbenstangengleitabschnitt abstützt.

Gemäß einem vorteilhaften Unteranspruch ist der Kolbenstangentragabschnitt mit dem radialen Absatz ausgeführt ist. Der radiale Absatz kann aufgrund dieser Ausgestaltung größer dimensioniert werden als es die Durchmesserdifferenz zwischen Kolbenstangentragabschnitt und Kolbenstangengleitabschnitt ermöglichen würde.

Das axial beweglich Dämpfventil ist zwischen mindestens zwei entgegengesetzt wirksamen Stützfedern axial beweglich auf dem Kolbenstangentragabschnitt gelagert, wobei eine der Stützfedern zwischen einem am Kolbenstangentragabschnitt ortsfesten Dämpfventil und dem axial beweglichen Dämpfventil und die andere Stützfeder zwischen dem axial beweglichen Dämpfventil und dem radialen Absatz verspannt ist. Diese Anordung bietet die Möglichkeit, dass die gesamten Ventileinrichtungen als Baueinheit unabhängig von dem Kolbenstangengleitabschnitt montiert werden können.

Anhand der folgenden Figurenbeschreibung soll die Erfindung näher erläutert werden.

Es zeigt:
- Fig. 1: Dämpfventil als Einzelteil
- Fig. 2: Dämpfventil innerhalb eines Schwingungsdämpfers
- Fig. 3: Dämpfventil mit einer mehrteiligen Kolbenstange

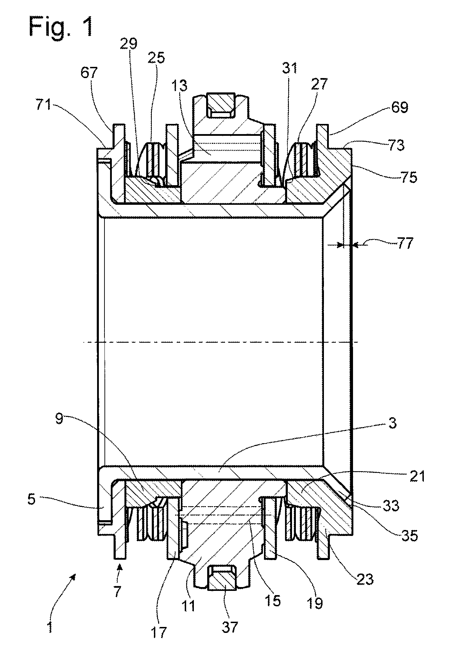

Die Fig. 1 zeigt ein Dämpfventil 1 als Baueinheit. Eine Führungshülse 3 bildet das zentrale Bauteil und verfügt endseitig über einen abgewinkelten Anschlag 5, an dem ein erster Federteller 7 zur Anlage kommt. Der Federteller erstreckt sich radial über den Anschlag 5 und zentriert sich mit seinem Innendurchmesser auf der Führungshülse. 3. Dem Federteller 7 schließen sich eine erste Distanzhülse 9 und ein Dämpfventilkörper 11 an. Der Dämpfventilkörper verfügt über Durchgangsöffnungen 13; 15 für beide Durchströmungsrichtungen, wobei die Durchgangsöffnungen endseitig von mindestens einer Ventilscheibe 17; 19 zumindest teilweise abgedeckt werden. Eine zweite Distanzhülse 21 ist einteilig mit einem zweiten Federteller 23 ausgeführt.

Die Ventilscheiben 17; 19 werden von mindestens einer Schließfeder 25; 27 auf den Dämpfventilkörper 11 vorgespannt. Beide Distanzhülsen 9; 21 verfügen für die Ventilscheiben 17; 19 über eine Abhubbegrenzungsfläche 29; 31. Die genannten Bauteile werden auf die Führungshülse 3 aufgefädelt bilden zischen dem ersten einem zweiten Anschlag 33 eine Verspannungskette. Auch der zweite Anschlag 33 wird von einem nach radial außen abgewinkelten Bereich der Führungshülse 3 geformt, wobei die Innenseite des zweiten Federtellers 23 eine Konusfläche 35 aufweist, auf die der zweite Anschlag 33 umgeformt wird. Damit ist der Dämpfventilkörper 11 formschlüssig innerhalb des Dämpfventils fixiert. Ein Dichtring 37 im Dämpfventilkörper 11 kann mit dem Dämpfventilkörper oder anschließend montiert werden.

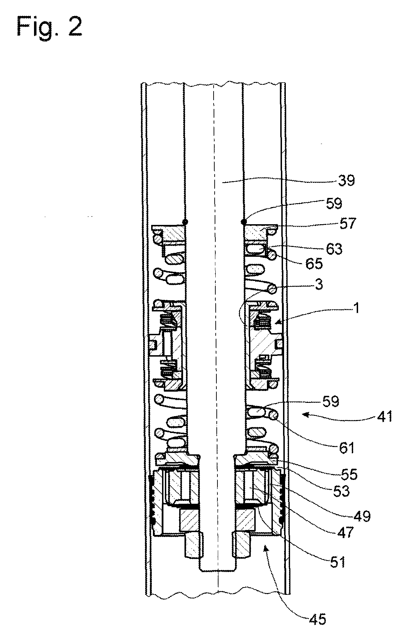

Die nun vorliegende Baueinheit des Dämpfventils 1 gleitet mit ihrer Führungshülse 3 auf einer Kolbenstange 39 eines Schwingungsdämpfers 41, der von dem ein Ausschnitt in der Fig. 2 dargestellt ist. An der Kolbenstange ist ein Kolbenventil als orstfestes Dämpfventil 45 angeordnet. Das ortsfeste Dämpfventil 45 verfügt ebenfalls über Durchgangsöffnungen 47; 49 für beide Strömungsrichtungen in Verbindung mit jeweils mindestens einer Ventilscheibe 51; 53, die in Schließrichtung auf einen Kolbenkörper 55 vorgespannt sind. Das ortsfesten Dämpfventil 45 verfügt über eine Stützscheibe 55, die die Abhubbewegung der mindestens einen Ventilscheibe 53 begrenzt. Axial beabstandet ist auf der Kolbenstange 39 eine zweite Stützscheibe 57 mit einem Sicherungsring 59 fixiert. Zwischen den beiden Stützscheiben 55; 57 kann das Dämpfventil 1 eine Relativbewegung gegen die entgegengesetzt gerichteten Kräfte von Stützfedern 59; 61; 63; 65 zur Kolbenstange 39 ausführen. Die innenliegenden Stützfedern 59; 63 sind kürzer ausgeführt als die äußeren Stützfeder 61; 65, um eine gestufte Stützkraftkennlinie zu erreichen. Im Hinblick auf eine kurze Baulänge verfügen die innenliegenden Stützfedern über einen rechteckigen oder ovalen Drahtquerschnitt.

Die äußeren Stützfedern greifen an Abstützfläche 67; 69 der Federteller 7; 23 an, s. Fig. 1, die auf der dem Ventilkörper abgewandten Seite ausgeführt sind. Eine Zentrierung 71; 73 verhindert ein radiales Auswandern der äußeren Stützfedern 61; 65 auf den Abstützflächen 67; 69. Eine Abstützfläche 75, die der Konusfläche 35 benachbart ist, ist bezogen auf den zweiten Anschlag 33 mit einem axialen Überstand 77 ausgeführt, so dass die innere Stützfeder 59 stets auf der Abstützfläche 75 zur Anlage kommt.

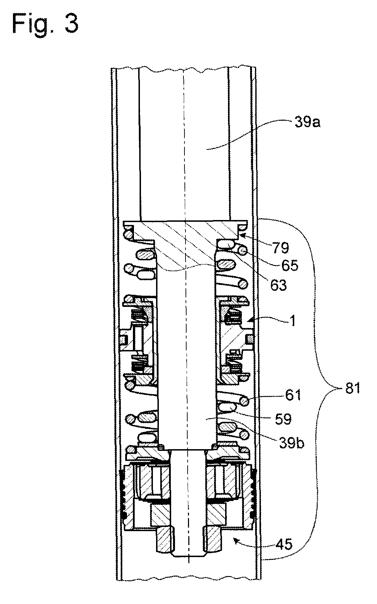

Die Fig. 3 zeigt eine Ausführungsform eines Schwingungsdämpfers 41 mit einem axial beweglichen Dämpfventil 1 gemäß der Fig. 1. Der wesentliche Unterschied zur Fig. 2 besteht darin, dass die Kolbenstange zumindest einen Kolbenstangengleitabschnitt 39a und einen Kolbenstangentragabschnitt 39b umfasst. Der Kolbenstangengleitabschnitt bildet den Teil, der mit einer nicht dargestellte Kolbenstangenführung zusammenwirken kann. Der Kolbenstangentragabschnitt verfügt endseitig in Richtung des Kolbenstangengleitabschnitts über einen radialen Absatz 79, an dem die beiden Stützfedern 63; 65 zur Anlage kommen.

Bei der Montage wird der von dem Kolbenstangengleitabschnitt separate Kolbenstangentragabschnitt mit den Stützfedern 63; 65 und dem als Baueinheit vorliegenden Dämpfventil 1 bestückt. Danach werden die Stützfedern 59; 61 auf den Kolbenstangentragabschnitt und die das Dämpfventil 45 umfassenden Bauteile gefädelt, so dass das Dämpfventil 1 über die Stützfedern 59 - 65 zwischen dem ortsfesten Dämpfventil 45 und dem radialen Absatz 79 des Kolbenstangentragabschnitts verspannt ist. Diese komplette Baueinhei 81 wird mittels einem Schweißverfahren, z. B. Reibschweißen an dem Kolbenstangengleitabschnitt 39a befestigt.

Die prinzipielle Funktionsweise des Schwingungsdämpfers ist aus der DE 100 41 199 C1 bekannt.

## Patentansprüche

1. Dämpfventil (1) für einen Schwingungsdämpfer (41), umfassend eine Führungshülse (3), die auf einer Kolbenstange (39; 39b) des Schwingungsdämpfers (41) gleitet, wobei ein ringförmiger, mit mindestens einer Durchgangsöffnung (13; 15) versehener Dämpfventilkörper (11) axial auf der Führungshülse (3) formschlüssig fixiert ist, wobei die Durchgangsöffnung (13; 15) von mindestens eine ventilscheibe (17; 19) zumindest teilweise abgedeckt ist, die durch mindestens eine Schließfeder (25; 27) vorgespannt ist, die sich an einem mit der Führungshülse (3) verbundenen Federteller (7; 23) endseitig abstützt,
**dadurch gekennzeichnet,**
**dass** der Dämpfventilkörper (11) und ein von der Führungshülse (3) separat ausgeführter Federteller (7; 23) zwischen zwei axial beanstandeten Anschlägen(5; 33) der Führungshülse (3) eine Verspannungskette bilden.

2. Dämpfventil nach Anspruch 1,
**dadurch gekennzeichnet,**
**dass** zwischen dem Federteller (7; 23) und dem Dämpfventilkörper (11) eine Distanzhülse (9; 21) angeordnet ist.

3. Dämpfventil nach Anspruch 2,
**dadurch gekennzeichnet,**
**dass** die Distanzhülse (21) und der Federteller (23) einteilig ausgeführt sind.

4. Dämpfventil nach Anspruch 2,
**dadurch gekennzeichnet,**
**dass** die Distanzhülse (9; 21) eine Abhubbegrenzungsfläche (29; 31) für die mit dem Dämpfventilkörper (11) zusammenwirkende Ventilscheibe (17; 19) aufweist.

5. Dämpfventil nach Anspruch 1,
**dadurch gekennzeichnet,**
**dass** sich der Federteller (7; 23) radial über den Anschlag (5; 33) der Führungshülse (3) erstreckt.

6. Dämpfventil nach Anspruch 1,
**dadurch gekennzeichnet,**
**dass** der Federteller (7; 23) auf seiner dem Ventilkörper (11) abgewandten Seite eine Abstützfläche (67; 69) für eine auf das Dämpfventil wirkende Stützfeder (61; 65) aufweist und die Abstützfläche (67; 69) mit einer Zentrierung (71; 73) für die Stützfeder (61; 65) aufgeführt ist.

7. Dämpfventil nach Anspruch 6,
**dadurch gekennzeichnet,**
**dass** die Abstützfläche (75) in Richtung der Stützfeder (59) bezogen auf den Anschlag (33) der Führungshülse (3) mit einem axialen Überstand (77) ausgeführt ist.

8. Dämpfventil nach Anspruch 1,
**dadurch gekennzeichnet,**
**dass** das Dämpfventil (1) auf einem Kolbenstangentragabschnitt (39b) axial beweglich gleitet, der an einen Kolbenstangengleitabschnitt (39a) angeschweißt ist.

9. Dämpfventil nach Anspruch 8,
**dadurch gekennzeichnet,**
**dass** sich die mindestens eine Stützfeder (63; 65) an einem radialen Absatz (79) zwischen dem Kolbenstangentragabschnitt (39b) und dem Kolbenstangengleitabschnitt (39a) abstützt.

10. Dämpfventil nach Anspruch 9,
**dadurch gekennzeichnet,**
**dass** der Kolbenstangentragabschnitt (39b) mit dem radialen Absatz (39a) ausgeführt ist.

11. Dämpfventil nach Anspruch 9,
**dadurch gekennzeichnet,**
**dass** an dem Kolbenstangentragabschnitt (39b) ein ortsfestes Dämpfventil (45) befestigt ist.

12. Dämpfventil nach Anspruch 11,
**dadurch gekennzeichnet,**
**dass** das axial bewegliche Dämpfventil (1) zwischen mindestens zwei entgegengesetzt wirksamen Stützfedern (59 - 65) axial beweglich auf dem Kolbenstangentragabschnitt (39b) gelagert ist, wobei eine der Stützfedern (59; 61) zwischen dem an dem Kolbenstangentragabschnitt (39) ortsfesten Dämpfventil (45) und dem axial beweglichen Dämpfventil (1) und die andere Stützfeder (63; 65) zwischen dem axial beweglichen Dämpfventil (1) und dem radialen Absatz (79) verspannt ist.

## Claims

1. Damping valve (1) for a vibration damper (41), comprising a guide sleeve (3) which slides on a piston rod (39; 39b) of the vibration damper (41), an annular damping-valve body (11) which is provided with at least one through opening (13; 15) being fixed axially on the guide sleeve (3) in a positively locking manner, the through opening (13; 15) being covered at least partially by at least one valve plate (17; 19) which is prestressed by at least one closing spring (25; 27) which is supported on the end side on a spring collar (7; 23) which is connected to the guide sleeve (3), **characterized in that** the damping-valve body (11) and a spring collar (7; 23) which is configured separately from the guide sleeve (3) form a bracing chain between two stops (5; 33) of the guide sleeve (3) which are spaced apart axially.

2. Damping valve according to Claim 1, **characterized in that** a spacer sleeve (9; 21) is arranged between the spring collar (7; 23) and the damping-valve body (11).

3. Damping valve according to Claim 2, **characterized in that** the spacer sleeve (21) and the spring collar (23) are configured in one piece.

4. Damping valve according to Claim 2, **characterized in that** the spacer sleeve (9; 21) has a lift-restricting face (29; 31) for the valve plate (17; 19) which interacts with the damping-valve body (11).

5. Damping valve according to Claim 1, **characterized in that** the spring collar (7; 23) extends radially beyond the stop (5; 33) of the guide sleeve (3).

6. Damping valve according to Claim 1, **characterized in that**, on its side which faces away from the valve body (11), the spring collar (7; 23) has a supporting face (67; 69) for a supporting spring (61; 65) which acts on the damping valve, and the supporting face (67; 69) is configured with a centring means (71; 73) for the supporting spring (61; 65).

7. Damping valve according to Claim 6, **characterized in that**, in the direction of the supporting spring (59), the supporting face (75) is configured with an axial projection (77) in relation to the stop (33) of the guide sleeve (3).

8. Damping valve according to Claim 1, **characterized in that** the damping valve (1) slides in an axially movable manner on a piston-rod carrying section (39b) which is welded onto a piston-rod sliding section (39a) .

9. Damping valve according to Claim 8, **characterized in that** the at least one supporting spring (63; 65) is supported on a radial shoulder (79) between the piston-rod carrying section (39b) and the piston-rod sliding section (39a) .

10. Damping valve according to Claim 9, **characterized in that** the piston-rod carrying section (39b) is configured with the radial shoulder (39a).

11. Damping valve according to Claim 9, **characterized in that** a stationary damping valve (45) is fastened to the piston-rod carrying section (39b).

12. Damping valve according to Claim 11, **characterized in that** the axially movable damping valve (1) is mounted on the piston-rod carrying section (39b) such that it can be moved axially between at least two supporting springs (59-65) which act in an opposed manner, one of the supporting springs (59; 61) being stressed between the damping valve (45), which is stationary on the piston-rod carrying section (39), and the axially movable damping valve (1) and the other supporting spring (63; 65) being stressed between the axially movable damping valve (1) and the radial shoulder (79).

## Revendications

1. Soupape d'amortissement (1) pour un amortisseur d'oscillations (41), comportant une douille de guidage (3) qui glisse sur une tige de piston (39 ; 39b) de l'amortisseur d'oscillations (41), un corps de soupape d'amortissement (11) annulaire pourvu d'au moins une ouverture traversante (13 ; 15) étant fixé axialement sur la douille de guidage (3) par engagement par complémentarité de formes, l'ouverture traversante (13 ; 15) étant au moins partiellement recouverte par au moins un disque de soupape (17 ; 19) qui est précontraint par au moins un ressort de fermeture (25 ; 27) qui s'appuie du côté de son extrémité contre une coupelle de ressort (7 ; 23) reliée à la douille de guidage (3),
**caractérisée en ce que**
le corps de soupape d'amortissement (11) et une coupelle de ressort (7 ; 23) réalisée de manière séparée de la douille de guidage (3) forment une chaîne de serrage entre deux butées (5 ; 33), espacées axialement, de la douille de guidage (3).

2. Soupape d'amortissement selon la revendication 1,
**caractérisée en ce**
**qu'**une douille d'écartement (9 ; 21) est disposée entre la coupelle de ressort (7 ; 23) et le corps de soupape d'amortissement (11).

3. Soupape d'amortissement selon la revendication 2,
**caractérisée en ce que**
la douille d'écartement (21) et la coupelle de ressort (23) sont réalisées d'une seule pièce.

4. Soupape d'amortissement selon la revendication 2,
**caractérisée en ce que**
la douille d'écartement (9 ;21) comprend une surface de limitation de soulèvement (29 ; 31) pour le disque de soupape (17 ; 19) coopérant avec le corps de soupape d'amortissement (11).

5. Soupape d'amortissement selon la revendication 1,
**caractérisée en ce que**
la coupelle de ressort (7 ; 23) s'étend radialement au-delà de la butée (5 ; 33) de la douille de guidage (3).

6. Soupape d'amortissement selon la revendication 1,
**caractérisée en ce que**
la coupelle de ressort (7 ; 23) présente, sur son côté opposé au corps de soupape (11), une surface d'appui (67 ; 69) pour un ressort d'appui (61 ; 65) agissant sur la soupape d'amortissement et la surface d'appui (67 ; 69) est réalisée avec un centrage (71 ; 73) pour le ressort d'appui (61 ; 65) .

7. Soupape d'amortissement selon la revendication 6,
**caractérisée en ce que**
la surface d'appui (75) est réalisée, dans la direction du ressort d'appui (59), avec une saillie axiale (77) par rapport à la butée (33) de la douille de guidage (3).

8. Soupape d'amortissement selon la revendication 1,
**caractérisée en ce que**
la soupape d'amortissement (1) glisse de manière mobile axialement sur une section de support de tige de piston (39b), laquelle section de support de tige de piston est soudée sur une section de glissement de tige de piston (39a).

9. Soupape d'amortissement selon la revendication 8,
**caractérisée en ce que**
l'au moins un ressort d'appui (63 ; 65) s'appuie contre un épaulement radial (79) entre la section de support de tige de piston (39b) et la section de glissement de tige de piston (39a).

10. Soupape d'amortissement selon la revendication 9,
**caractérisée en ce que**
la section de support de tige de piston (39b) est réalisée avec l'épaulement radial (39a).

11. Soupape d'amortissement selon la revendication 9,
**caractérisée en ce**
**qu'**une soupape d'amortissement fixe (45) est fixée à la section de support de tige de piston (39b).

12. Soupape d'amortissement selon la revendication 11,
**caractérisée en ce que**
la soupape d'amortissement (1) mobile axialement est montée sur la section de support de tige de piston (39b) entre au moins deux ressorts d'appui (59 - 65) agissant en sens contraires, l'un des ressorts d'appui (59 ; 61) étant serré entre la soupape d'amortissement fixe (45) sur la section de support de tige de piston (39) et la soupape d'amortissement (1) mobile axialement, et l'autre ressort d'appui (63 ; 65) étant serré entre la soupape d'amortissement (1) mobile axialement et l'épaulement radial (79).
